(19) Europäisches Patentamt
European Patent Office
Office européen des brevets

(11) EP 0 594 198 B1

(12) EUROPEAN PATENT SPECIFICATION

(45) Date of publication and mention
of the grant of the patent:
**27.01.1999 Bulletin 1999/04**

(51) Int Cl.6: **H04L 12/56, H04Q 11/04**

(21) Application number: **93117158.1**

(22) Date of filing: **22.10.1993**

(54) **Crossbar switch for synthesizing multiple backplane interconnect topologies in communications system**

Kreuzschienenschalter zum Herstellen Mehrfach-Rückwand-Verbindungs-Topologien in Kommunikationssystemen

Commutateur à coordonnées pour la synthèse des topologies interconnectées à fonds de panier multiples

(84) Designated Contracting States:
**DE FR GB IT**

(30) Priority: **22.10.1992 US 964792**

(43) Date of publication of application:
**27.04.1994 Bulletin 1994/17**

(73) Proprietor: **CABLETRON SYSTEMS, INC.
Rochester, NH 03866 (US)**

(72) Inventors:
• **Poole, Nigel Terence
  Natick, Massachusetts 01760 (US)**
• **Windnagle, Carlton Frederick
  Northborough, Massachusetts 01532 (US)**
• **Spinney, Alan Barry
  Wayland, Massachusetts 01778 (US)**

(74) Representative: **Betten & Resch
Reichenbachstrasse 19
80469 München (DE)**

(56) References cited:
**EP-A- 0 099 978         EP-A- 0 396 119
EP-A- 0 488 057**

**Description**

BACKGROUND OF THE INVENTION

This invention relates to an enhanced crossbar switch of the type used in a packet data communications system, and more particularly to a crossbar switch able to synthesize both ring and bus topologies, as well as point-to-point interconnections.

In systems for implementing packet data communications networks, a wide variety of different configurations are needed, due to the variety of different connection schemes and protocols commonly used (such as token ring, Ethernet, star connections, etc.). Bridges between network segments of different configuration are needed in large networks employing a variety of different equipment made by different manufacturers. It is of course possible to manufacture network and bridge equipment for each one of the standard schemes, and for each possible connection between segments using different schemes, but this approach is not economically viable. Instead, it is proposed to provide network interconnection equipment that is capable of statically or dynamically synthesizing different types of interconnect, including a switch matrix and ring or bus topologies.

A crossbar switch is used in network implementations to make selective interconnections between two ports of a switch, where each port may be a network node or a segment of a network. Use of a crossbar switch is not needed in a token ring or Ethernet bus alone, but may be needed or appropriate when connections are made between ring or bus topologies. Alternatively, an number of ring or bus segments may be connected themselves into a ring or bus, rather than by using a crossbar switch. Accordingly, a flexible interconnect device is needed, allowing reconfiguration as the situation demands.

Network interconnect equipment has been available using multiple independent interconnect schemes. Hubs providing some number of broadcast buses, some number of ring interconnect topologies, and some number of point-to-point links, all on a backplane interconnect, have been proposed. Line cards mating with such a backplane must incur the cost of connecting to multiple buses (or multiple rings, depending upon the card type) if they want to take advantage of reconfigurability (for example, as a fault tolerant measure). Additionally, the backplane must bear the cost (in wiring layers and connectors) of either having more interconnect capacity than can ever be used, or of not being able to support arbitrary system configurations, or both.

EP 0 099 978 A3 shows a starloop communication system including a plurality of terminals and processors as well as a digital switch. The switch is designed to allow loop, star or multidrop network configurations incorporating the terminals and processors.

EP 0 488 057 A1 shows an integrated backplane interconnection architecture for use in a PC mother board. The interconnection topology may be a bus topology, a ring topology or a circuit switched topology.

SUMMARY OF THE INVENTION

The invention in its broad form resides in a Cross Bar Switch as recited in claim 1. The invention also resides in a method of operating a crossbar Switch as recited in claim 7. Further improvements are given in the respective subclaims.

In accordance with one embodiment of the invention, an improved crossbar switch is provided which is able to implement all of the necessary interconnect topologies. The crossbar logically resides in the backplane, although it may be physically separate from it. The line cards that connect to the backplane connect logically to the improved crossbar, not directly to the other cards, and the crossbar is programmed to synthesize the appropriate interconnect topology. The crossbar connections are programmed dynamically for cards requiring packet-switched point-to-point connections. Other cards requiring ring topology interconnection can supported by statically programming the crossbar switch connections which are connected to such cards. A primary feature of the invention is providing an enhanced crossbar able to synthesize a bus topology.

BRIEF DESCRIPTION OF THE DRAWINGS

A better understanding of the invention may be had from the following description of preferred embodiments, given by way of example, and to be understood in conjunction with the accompanying drawing wherein:

Figure 1 is a diagram in block form of a communications network which may use features according to one embodiment of the invention;

Figure 1a is an electrical diagram in block form of a controller for the communications network of Figure 1;

Figure 2 is a diagram of construction of a hub used in the system of Figure 1, with slots for line cards and a backplane wiring scheme;

Figure 3 is a diagram of a form of a backplane wiring parallel bus used in the hub of Figure 2;

Figure 4 is a diagram of a way of wiring the backplane of Figure 2, according to one example of construction;

Figure 5 is a diagram of a backplane wiring scheme according to one embodiment of the invention;

Figure 6 is a diagram of a wiring arrangement using the scheme of Figure 5 to create a bus topology;

Figure 7 is a diagram of a wiring arrangement using the scheme of Figure 5 to create a ring topology;

Figure 8 is a diagram of a crossbar arrangement according to a separate embodiment of construction of the system of Figure 1;

Figure 9 is a diagram of a detail of the crosspoints in the embodiment of Figure 8; and

Figure 10 is a diagram of implementation of a bus topology in the embodiment of Figures 8 and 9.

## DETAILED DESCRIPTION OF SPECIFIC EMBODIMENT

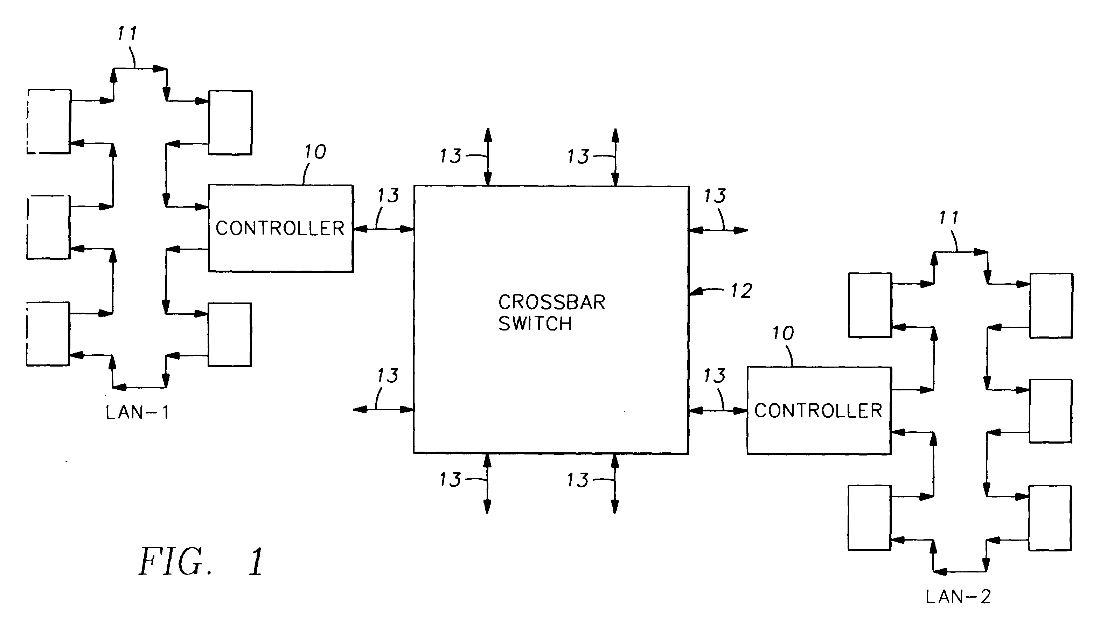

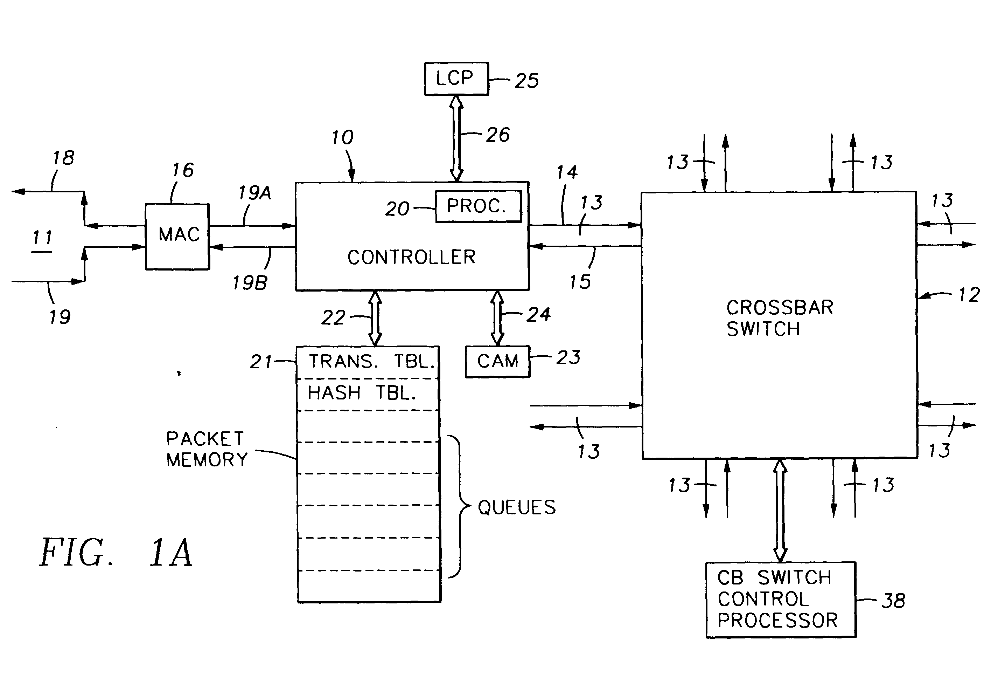

Referring to Figure 1, a packet data communications network which may use the features of the invention includes a controller 10 for interface between an FDDI link 11 and a crossbar switch device 12. The crossbar switch device 12 has a number of input/output ports 13, and each one of these ports 13 may be connected by another controller 10 to another network segment 11 such as an FDDI link or a token ring or Ethernet bus, for example. The crossbar switch 10 ordinarily makes a direct point-to-point interconnect between one port 13 and another port 13, so that the crossbar acts as a bridge or router in the network, linking one network segment to another. A station on a link 11 sends a packet onto its network segment with a destination address which is on another, different segment. The controller 10 for this segment detects the address as being that of a station on one of the remote segments, and generates local switching information to send to the crossbar 12 so that the appropriate interconnect can be made to send the packet to the proper port 13 and link 11, via another controller 10. As set forth below, the crossbar switch device can function as a flexible interconnect device to create a ring or bus using the ports 13, as well as functioning as a point-to-point connector as is the usual case for crossbar switches.

Referring to a more detailed view of Figure 1a, each port 13 of the crossbar has a data-in path 14 and a separate data-out path 15. The interface between the controller 10 and the FDDI link 11 is by way of a media access control (MAC) device 16, functioning to convert the serial light transmission on the incoming fiber optic cable 17 to electrical pulses, to recover the clock, convert the serial data on the optic loop to 6-bit parallel symbols, act as an elastic buffer to allow reclocking of data entering the controller 10, etc. Of course, all of these functions are reversed for outgoing data on the cable 18. The interface between the controller 10 and the MAC device 16 is by an incoming 8-bit parallel data path 19A (with additional parity and control lines) and an outgoing 8-bit parallel path 19B.

The controller 10 contains a processor or state machine 20 to execute various processes as will be described, and accesses a packet memory 21 via an interface 22, as well as a content addressable memory (CAM) 23 via interface 24. The packet memory 21 is addressed by a 20-bit address bus, and data is transferred by a 56-bit bidirectional data bus, included in the interface 22; various control lines are also in the interface 22. The CAM 23 is driven by a 14-bit bus and various control lines in the interface 24. The packet memory 21 is a RAM which stores a number of queues for incoming and outgoing data packets, as well as translation tables and hash tables as will be described. In addition, the packet memory stores certain data for which addresses are matched in the CAM 23.

The controller 10 also interfaces with a line card processor 25 by bus 26. The line card processor 25 is used to execute some diagnostic and initialization functions, and does not operate in routine packet transfer. The controller 10 contains a processor or state machine 20 to execute various processes for packet data transfer as will be described. This processor 20 is a microprocessor or the like, executing a stored program, as is well known.

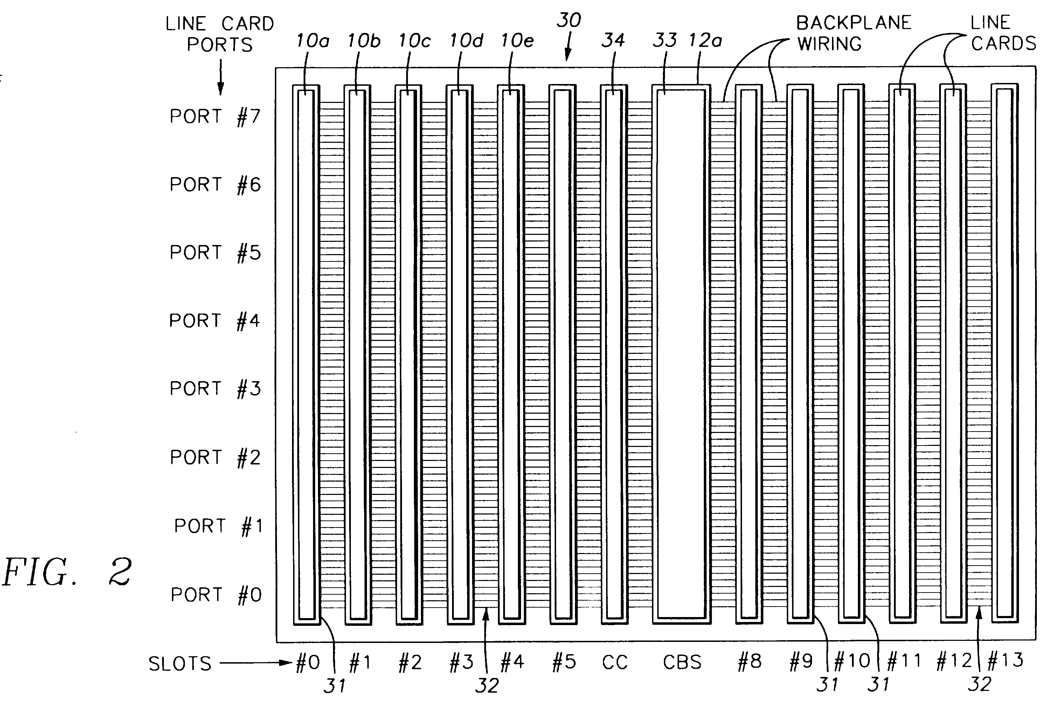

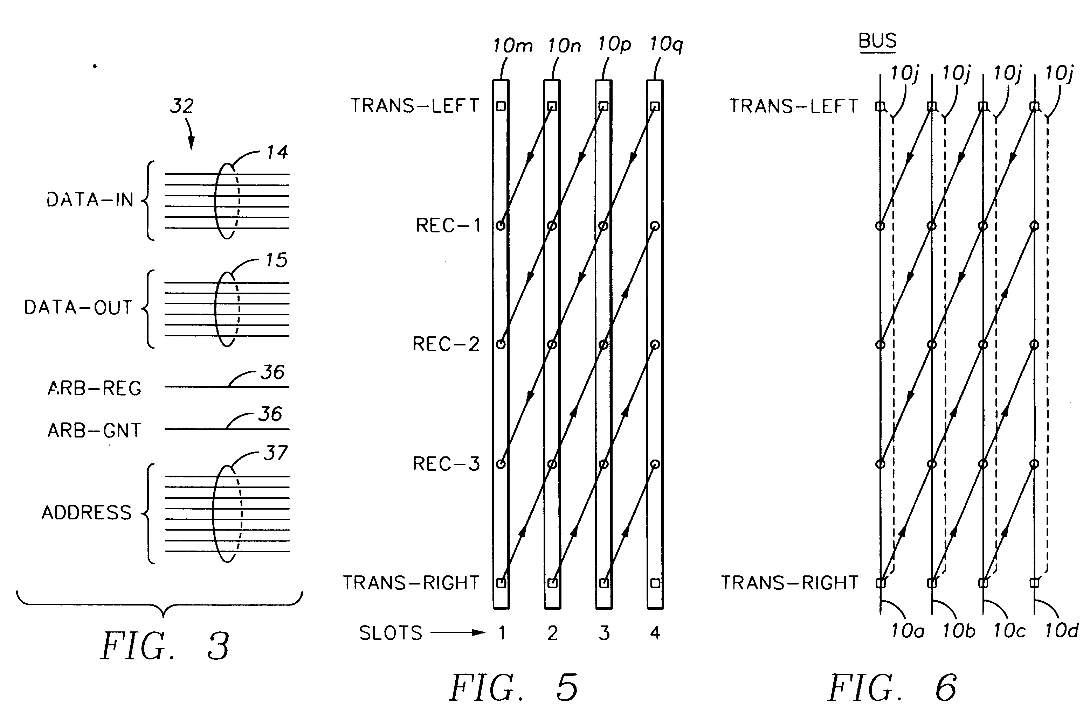

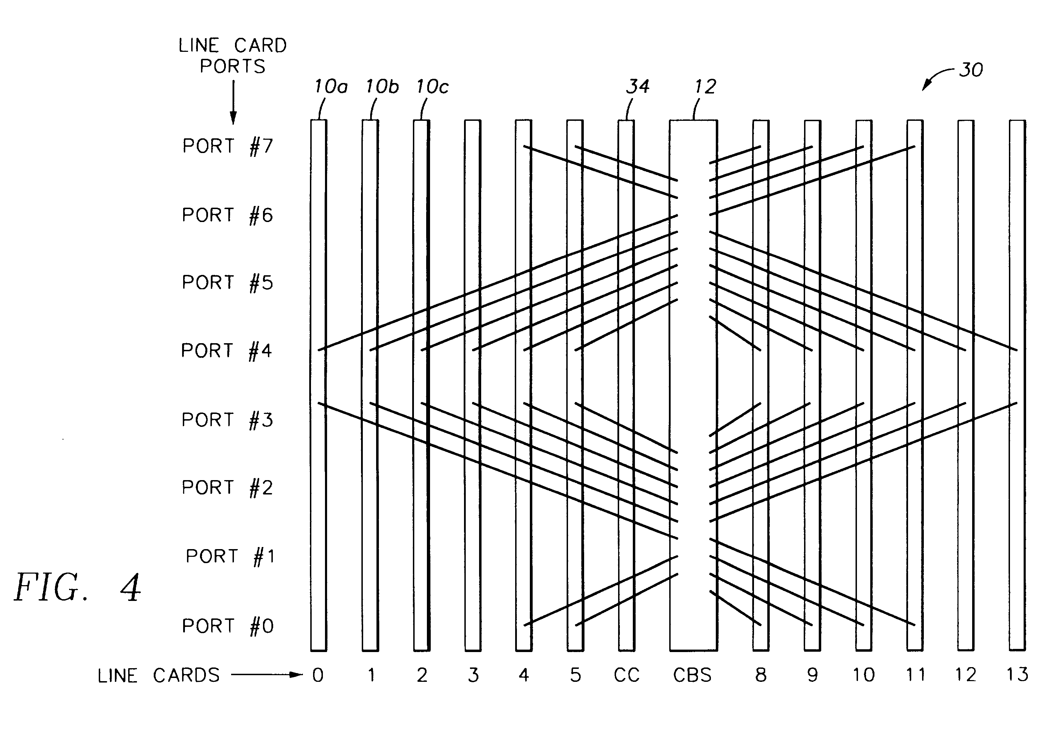

Referring to Figure 2, a hub in a communications network including the system of Figure 1 is constructed, in one embodiment, using a housing or cabinet 30 having a number of line cards 10a, 10b, 10c, etc., (up to twelve line cards in one embodiment, each line card having a controller 10 therein) which are plugged into slots 31 for a backplane wiring arrangement 32 as will be described. The crossbar switch 12 is also constructed on a card 12a plugged into a slot 33 to connect to the backplane wiring. A clock card 34 is plugged into a slot in the backplane wiring to supply clocks to provide synchronous timing for all of the components of the backplane on the bus. Each one of the line cards 10a, 10b, etc., can contain one of the controllers 10 to engage a port 13 of the crossbar, or, alternatively, more than one of the controllers 10 can be located on one line card so that a line card supports more than one of the ports 13. In either event, a controller 10 of a line card has a network segment such as an FDDI link 11 or another crossbar connected to it; if there are more than one port supported, then there is a link 11 for each port. The backplane wiring 32 is constructed as a synchronous parallel bus which is arbitrated, with the various line cards 10a, 10b, etc., and the crossbar 12, requesting and being granted access to the bus for each cycle. In a given hub, not all of the twelve line cards and seven port positions per line card are populated at one time; the crossbar switch 12 can handle only thirty-six ports, total, in one embodiment. Thus, usually not all of the slots have line cards in them, and on a line card there is only one (or two) ports. The particular one of the seven potential port positions on a card that is used depends upon the function to be implemented, as will be described. However, the synchronous parallel bus must contain both input path 14 and output path 15 for each port 13, so the synchronous parallel bus interconnecting all of the slots with the crossbar switch 12 contains a number of complete sets of data-in and data-out lines 14 and 15, with each set including six lines for data-in and six lines for data-out, as seen in Figure 3. In addition, the backplane wiring 32 includes arbitration lines 36 going from each line card processor 25 to the crossbar; the arbitration lines include a request line and a grant line separately for each one of the line cards. Address lines 37 are used to designate the port to which data is to be sent, along with a code indicating the type of bus cycle. The backplane bus acts in a pipelined manner. Data is exchanged in each bus clock cycle, while arbitration and addressing for subsequent cycles are going on. That is, an entire data exchange requires several cycles, but these are pipelined so a complete data exchange occurs on average in every bus cycle. The cycles for a data exchange include a request cycle, a grant cycle and address cycle occurring simultaneously, a data send/receive cycle with a response (acknowledge), and an error reporting cycle. If a controller 10 is sending a packet to another controller 10 on the crossbar, it is handled on a cycle-by-cycle basis; the controller requests the bus when a symbol is ready to send, then when the bus is granted sends to the crossbar the address of the destination followed by the data of this symbol. A common path (the backplane bus) is thus shared for all connections between ports 13 of the crossbar, on a time-division multiplexed basis. A crossbar switch control processor 38 in the crossbar card 33 receives all of the lines of the backplane wiring 32 and controls arbitration for the bus as described.

At least one of the seven potential ports on a line card is usually connected by the backplane wiring directly to the crossbar switch 12 for point-to-point communication with any of the ports 13 of the crossbar. For example, as seen in Figure 4, port #3 and port #4 of each of twelve line cards is connected to the crossbar switch 12 by the backplane bus, and port #0 and port #7 are likewise directly connected to the crossbar for line cards #4, #5, #8, #9, and #10. Thus, for these cards, any of the directly-connected ports #'s can have their crossbar connections controlled by the controller 38. However, other port #'s of the line cards for the hub have differently-wired connections to provide "smart" hub functions.

Referring to Figure 5, an important feature of one embodiment is the provision of separate connecting paths between certain ones of the line cards, these paths not using the backplane wiring 32 of Figure 3 or going through the crossbar switch 12. In a simplified scheme, illustrated in Figure 5 for explanatory purposes, a four-slot backplane includes slots 31 for line cards 10m, 10n, 10p and 10q, referred to as backplane slot-1, slot-2, slot-3, and slot-4. Each line card 10p, etc., has five logical connections to the backplane, two indicated by a "□" being transmit ports and three indicated by a "o" being receive ports. Data flows from the line card into the backplane at the transmit ports, and data flows from backplane onto the line card at the receive ports. In general, there are always two transmit ports but there will be (N-1) receive ports for a backplane with N slots. In contrast to a typical bus topology, the wiring pattern shown is diagonal, rather than horizontal, with connections 10s allowing data to flow from a transmit port to a receive port. The connections (ports) are either transmit or receive, whereas in a typical bus topology of a backplane, each port is required to support both transmit and receive capability, as is used for the backplane wiring of Figures 2 and 3 connecting all of the slots to the crossbar and clock card.

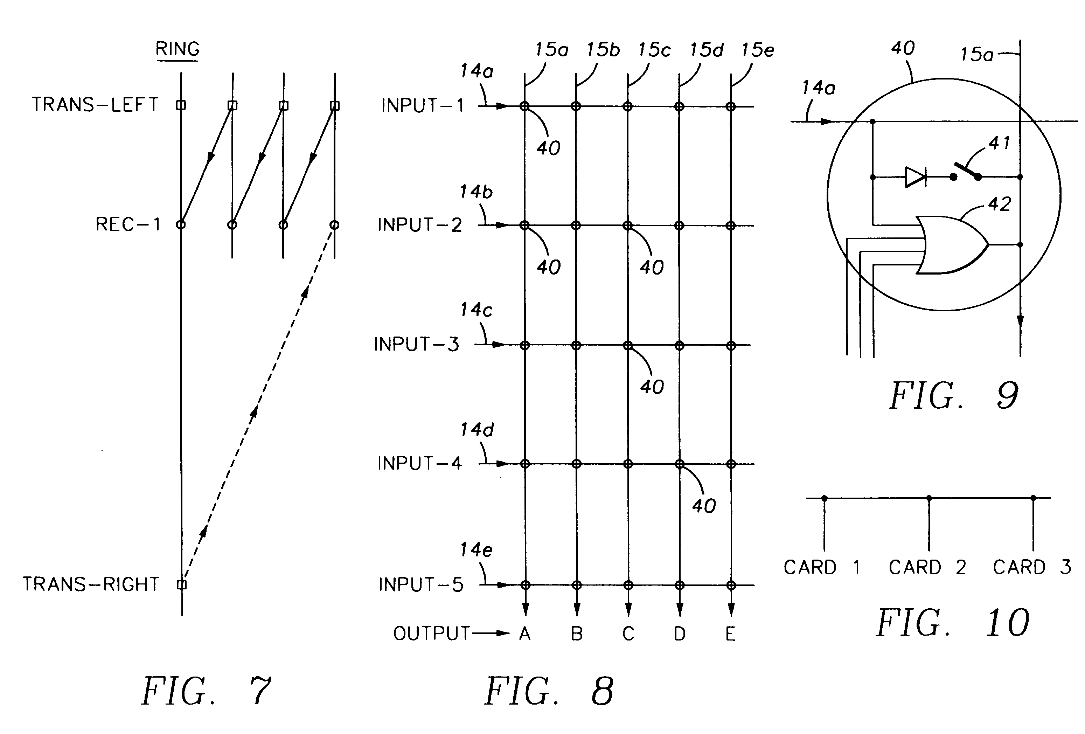

The wiring scheme of Figure 5 includes the "bus" and "ring" topologies as subsets. If each daughter card 10m, 10n, 10p, and 10q connects the two transmit ports (transmit-left and transmit-right) together internally (indicated by a jumper 10j) as seen in Figure 6, a bus is provided in which any port (card) can transmit to the bus and all other ports will simultaneously receive. The backplane wiring to implement this construction looks like a typical bus, except that the bus is "helical" rather than horizontal. On the other hand, if only the top two ports (transmit-left and receive-1) are considered, as illustrated in Figure 7, a ring topology is provided. The ring is completed by including the transmit-right port of slot-1. The three cards in slot-1 to slot-3 of Figure 7 each receive at their receive-1 port data from the transmit-left port of the card to their right, will the card in slot-4 receives from the transmit-right port of the card in slot-1, completing a closed ring. No card can transmit to any other card except by the connection of Figure 7. In the embodiment of Figure 4, the port-0, port-1, port-2, port-3, port-5, port-6, and port-7 of line cards in slot-0 to slot-3, for example, can be connected as in Figures 5-7, simulating a bus or a ring in a permanent configuration, not using the crossbar switch 12.

The scheme of Figures 8-10 can support multiple rings, where each ring includes an arbitrary collection of line cards (where each line card belongs to only one ring). This flexibility is often required in token ring hubs and FDDI wiring concentrators, and is typically supported by having N backplane bus channels where there are N slots. Clearly, both the N horizontal channels and the (N + 1)-port proposed scheme can support such arbitrary ring connectivity requirements.

For supporting such arbitrary ring topologies, the scheme of Figures 5-7 offers several advantages over an N-channel backplane bus.

First, from a line card's perspective, the two transmit ports are always in the same place. Thus, at most two transmitters are required to communicate with other line cards. In a typical bus topology, with N backplane slots, a line card requires N transmitters in order to transmit onto any one of the N bus channels.

Second, each line card requires only (N - 1) receivers, in contrast to the requirement for N receivers for a typical backplane having N channels.

Third, each line card's transmitter is always transmitting at one end of the diagonal bus; in a typical horizontal bus scheme, the transmitters must be capable of driving a bus at any point along its physical length. Several electrical advantages are available when a bus needs only to be driven at one end. One, the transmitter sees a lower load impedance; its drive requirements are lower, which may translate into cheaper, smaller faster or lower power transmitters. Two, reflections on the bus can be controlled by terminating the bus at one end only, namely at the transmitter. This is not possible in a horizontal scheme, since the transmitter is not guaranteed to be at the end of the bus. Accordingly, termination resistors are usually required on a horizontal bus. These termination resistors must be physically mounted on the backplane (or arranged to be permanently at the bus ends by other means). The termination resistors often consume power, complicate backplane implementation, and reduce reliability. The series termination scheme available with the diagonal bus wiring of Figure 5 eliminates the need for terminating resistors on the backplane and reduces power requirements.

Fourth, increased flexibility is offered for relay cards. A relay card (such as a bridge or router card) will often be required to connect to two (or more) rings, where each ring connects together a collection of mutually exclusive daughter cards. The increased flexibility is offered by connecting one ring to one transmit port, and the other ring to the other transmit port of the relay card. This places the restriction that the relay card must have at least one line card on the left and one on the right (i.e., the relay card cannot be in the leftmost or rightmost slot of the backplane).

In the construction of a hub as described in reference to Figure 2, the slot into which a line card is placed determines its possible functions in a system. Also, the port number (port-0 to port-7) that is used to connect a given line card in a given slot to the backplane wiring (or to wiring of Figures 5-7) also determines the possible functions in the system. Of course, as an alternative, the port number used can be changed by programming the line card controller 27, dynamically or statically, as well as by mechanically changing the wiring connections.

In another alternative embodiment, the connections to form a ring or bus topology may be implemented in the crossbar switch itself, instead of in the backplane wiring configuration. This alternative will now be described in reference to Figures 8-10.

The crossbar switch 12 has the general function of making a connection between one of its ports 13 and another port 13, upon request. Referring to Figure 8, the crossbar switch 12 is shown in simplified form, for illustrative purposes. In this example, only five inputs 14a-14e (horizontal lines or "rows") and five outputs 15a-15e (vertical lines or "columns") are shown, though it is understood that in an embodiment of the invention there are thirty-six ports 13, and of course larger crossbar switches can be constructed. The five inputs lines 14a, etc., are labelled input-1, input-2, etc., and the five output lines 15a, etc., are labelled output-A, output-B, etc., for reference in the explanation of operation. In Figure 8, the crosspoints 40 between horizontal lines 14a, etc., and vertical lines 15a, etc., are each programmed to be either "on" or "off." In the "on" state, data from a horizontal input line is copied onto the vertical output line, essentially by closing a switch at the crosspoint 40. In an embodiment as described wherein all of the ports share a synchronous parallel bus, each crosspoint 40 represents an arbitrated connection to the bus, under control of arbitration logic or the processor 38. Also, the connections at crosspoints 40 in Figure 8 are unidirectional, so for the data path of a port 13 with both input and output paths 14, 15 an input line and an output line are connected.

Some observations are valid for crossbar switches of the type shown in Figure 8. First, it is possible for all crosspoints 40 in a row to be "off"; in this case, the data input 14a, etc., on that row is ignored. Second, it is possible for one or more crosspoints 40 in a row to be "on"; in this case, data is copied from the input row onto all outputs 15a, etc., whose corresponding crosspoint 40 is "on." Third, it is possible for all crosspoints in a column 15a, etc., to be "off"; in this case, there is no output to that column. Fourth, it is ordinarily not possible to have more than one crosspoint 40 "on" in a column; this would cause conflict with multiple inputs attempting to drive the same output. According to a feature of this embodiment, however, as described below, provision is made for allowing this condition for certain connections.

Typically, a line card mating with a backplane as illustrated in Figure 2 will submit an input/output pair 14, 15 to the crossbar switch 12, e.g., card #1 will connect to input-1 and output-A, card #2 will connect to input-2 and output-B, etc. The crossbar switch 12 of Figure 2 can thus be programmed dynamically to support packet switched point-to-point connections, using the processor 37. However, in some situations static connections need to be established for supporting ring topologies, for example.

Assume that cards #1, #2, and #3 of Figure 8 are to be connected in a ring, with data flow

$$\#1 \Rightarrow \#2 \Rightarrow \#3 \Rightarrow \#1$$

Then by programming crosspoints 1B, 2C and 3A to be "on" and the other six crosspoints 40 associated with these three cards (1A, 1C, 2A, 2B, 3B, 3C) to be "off," the required ring topology is realized. Here, a crosspoint 1B means the crosspoint 40 at the intersection of input-1 and output-B. Thus, any desired ring topology can be synthesized by programming the crossbar 12 appropriately, particularly by programming the controller 37 to allow only these connections and to reject a request for a direct point-to-point connection between arbitrary ports 13.

While a classic crossbar switch as described can be configured as a ring as described, it is sometimes necessary to support broadcast bus topologies, as used, for example, in Ethernet repeaters. This can be done by adding another capability at each crosspoint 40, according to this embodiment of the invention.

The crosspoint switches 40 (functionally speaking) include, in addition to the unidirectional switch 41 of Figure 9 controlled by processor 37, other logic elements; in the simplest case the logic elements are OR gates 42. Of course, this is simulated in the controller 37 for the crossbar 12 using the synchronous parallel bus rather than in direct-wired circuitry. The OR gate 42 allows multiple inputs 14a, etc., to connect simultaneously to an output 15a, etc. This removes the fourth restriction mentioned above. Now each crosspoint 40 in the switch 12 can be either "on" or "off" completely independently of all the other crosspoints. If the crossbar switch is supporting analog, rather than digital, signals, then the OR gate can be replaced by an analog equivalent, e.g., a greatest magnitude selector or voltage summation operator.

With the enhancement of the crossbar switch as seen in Figure 9, if multiple inputs are connected to the same output, then the output will be the logical OR of all the inputs. This crossbar switch can now be programmed to synthesize a bus interconnect. Consider, for example, that the three cards #1, #2, and #3, mentioned above, are to be connected to a common bus 45 as shown in Figure 10. To accomplish this, all of the crosspoints 1A, 1B, 1C, 2A, 2B, 2C, 3A, 3B, 3C, are permanently programmed to the ON state. IN this case, any data sent to the crossbar switch 12 from card #1 by line 14a will be received by all three cards, as will data sent from card #2 or card #3. If two or more cards send data to the crossbar simultaneously, all three cards will receive the same thing, probably garbled data, the logical OR of all data being sent. This is analogous to the behavior of a wired-OR bus. The Ethernet type of collision sense is used to account for attempted simultaneous transmission on a bus, as is common practice.

Logically, the controller 10 consists of six independent processes. There are two for inbound packet processing, two for outbound packet processing, one for interfacing to the external packet memory 21, and one for line card processor 25 access. Packets inbound on FDDI line 17 and going through the controller 10 to the crossbar switch 12 are referred to as "inbound." Likewise, packets going in the direction of crossbar switch 12 through the controller 10 to the FDDI output line 18 are referred to as "outbound." By having independent processes which can operate in parallel, the controller 10 can process inbound and outbound packets at full speed. Distributed among the processes are control, parameter and status registers that are used to define the operational modes and to determine the internal state of the controller 10; these registers are accessed through the line card processor interface 26.

While the invention has been described with reference to a specific embodiment, the description is not meant to be construed in a limiting sense. Various modifications of the disclosed embodiment, as well as other embodiments of the invention, will be apparent to persons skilled in the art upon reference to this description.

## Claims

1. A crossbar switch (12), comprising:

   a plurality of input lines (14; 14a-14e);
   a plurality of output lines (15; 15a-15e);
   means (38) for programming said crossbar switch (12) to make a continuing set of connections between said input lines (14; 14a-14e) an said output lines (15; 15a-15e) to provide a required bus topology;
   a plurality of crosspoints (40), with one of said crosspoints (40) being at each intersection of an input line (14; 14a-14e) and an output line (15; 15a-15e);

   each one of said crosspoints (40) including:

   means (41) for selectively connecting an input line (14; 14a-14e) to an output line (15; 15a-15e) for unidirectional transfer of data;
   means (42) for selectively connecting one or more of said input lines (14; 14a-14e) to a single one of said output lines (15; 15a-15e) as an OR logic connection for unidirectional transfer of data.

2. A crossbar switch according to claim 1, wherein said input lines (14; 14a-14e) and said output lines (15; 15a-15e) are connected to a common parallel bus.

3. A crossbar switch according to claim 1, wherein said bus topology includes a plurality of line cards (10a-10j) as stations, each line card (10a-10j) being connected to one of said input lines (14) and one of said output lines (15).

4. A crossbar switch according to claim 1, wherein each different pair of one of said input lines and one of said output lines is a separate port of said crossbar switch, including means for dynamically programming said crossbar switch to make selective point-to-point connections between said input lines and said output lines, further including means for programming said crossbar switch to make a continuing set of connections between said input lines and said output lines to provide a ring topology, wherein said ring topology includes a plurality of line cards (10m-10q) as stations, each line card (10m-10q) being connected to one of said input lines and one of said output lines.

5.  A crossbar switch according to Claim 1 including means for programming said crossbar switch to make a continuing set of connections between more than one of said input lines and one of said output lines to provide a bus topology, wherein said bus topology includes a plurality of line cards (10m-10q) as stations, each line card (10m-10q) being connected to one of said input lines and one of said output lines.

6.  A crossbar switch according to claim 1, wherein said input lines and said output lines are all connected to a common synchronous parallel bus and said connections are made by arbitrating use of said bus in a time-division multiplexed manner, including a controller (38) to arbitrate use of said bus, said controller (38) receiving request signals from a station for each one of said inputs.

7.  A method of operating a crossbar switch having a plurality of input lines (14; 14a-14e), a plurality of output lines (15; 15a-15e) and a plurality of crosspoints (40), with a crosspoint (40) of said plurality of crosspoints being at each intersection of an input line (14; 14a-14e) and an output line (15; 15a-15e), comprising the steps of:

    deciding the alternative to do step A or step B,

        (A) selectively connecting an input line (14; 14a-14e) to an output line (15; 15a-15e) for unidirectional transfer of data;
        (B) selectively connecting one or more of said input lines (14; 14a-14e) to a single one of said output lines (15; 15a-15e) as an OR logic connection for unidirectional transfer of data;

    programming said crossbar switch (12) to make a continuing set of connections between said input lines (14; 14a-14e) and said output lines (15; 15a-15e) to provide a required bus topology.

8.  A method of operating a crossbar switch according to claim 7 including connecting each different pair of one of said input lines and one of said output lines as a separate port of said crossbar switch, including connecting each of a plurality of line cards (10m-10q) to one of said ports as stations of a network, including the step of dynamically programming said crossbar switch to make selective point-to-point connections between said input lines and said output lines.

9.  A method of operating a crossbar switch according to claim 7 including the step of programming said crossbar switch to make a continuing set of connections between said input lines and said output lines to provide a ring topology, including connecting a plurality of line cards (10m-10q) as stations of said ring topology, each line card (10m-10q) being connected to one of said input lines and one of said output lines.

10. A method of operating a crossbar switch according to claim 7 including the step of programming said crossbar switch to make a continuing set of connections between more than one of said input lines and one of said output lines to provide a bus topology, including connecting a plurality of line cards (10m-10q) as stations of said bus topology, each line card (10m-10q) being connected to one of said input lines and one of said output lines.

11. A method of operating a crossbar switch according to claim 7 including connecting all said input lines and said output lines to a common synchronous parallel bus and said connections are made by arbitrating use of said bus in a time-division multiplexed manners.

12. A method of operating a crossbar switch according to claim 11 including a controller (38) to arbitrate use of said bus, said controller (38) receiving request signals from a station for each one of said input.

**Patentansprüche**

1.  Crossbarschalter (12), mit:

        mehreren Eingangsleitungen (14; 14a-14e);
        mehreren Ausgangsleitungen (15; 15a-15e);
        einer Einrichtung (38) zum Programmieren des Crossbarschalters (12), um eine beständige Menge von Verbindungen zwischen den Eingangsleitungen (14; 14a-14e) und den Ausgangsleitungen (15; 15a-15e) herzustellen, um eine geforderte Bustopologie zu schaffen;

        mehreren Kreuzungspunkten (40), wovon sich an jedem Schnittpunkt einer Eingangslinie (14; 14a-14e) und einer Ausgangslinie (15; 15a-15e) einer befindet, wobei jeder der Kreuzungspunkte (40) enthält:

        eine Einrichtung (41) zum wahlweisen Verbinden einer Eingangsleitung (14; 14a-14e) mit einer Ausgangsleitung (15; 15a-15e) für eine unidirektionale Datenübertragung;
        eine Einrichtung (42) zum wahlweisen Verbinden einer oder mehrerer der Eingangsleitungen (14; 14a-14e) mit einer einzigen der Ausgangsleitungen (15; 15a-15e) als eine logische ODER-Verknüpfung für eine unidirektionale Datenübertragung.

**2.** Crossbarschalter nach Anspruch 1, bei dem die Eingangsleitungen (14; 14a-14e) und die Ausgangsleitungen (15; 15a-15e) an einen gemeinsamen parallelen Bus angeschlossen sind.

**3.** Crossbarschalter nach Anspruch 1, bei dem die Bustopologie mehrere Leitungskarten (10a-10j) als Stationen enthält, wobei jede Leitungskarte (10a-10j) an eine der Eingangsleitungen (14) und eine der Ausgangsleitungen (15) angeschlossen ist.

**4.** Crossbarschalter nach Anspruch 1, bei dem jedes verschiedene Paar einer der Eingangsleitungen und einer der Ausgangsleitungen ein getrennter Port des Crossbarschalters ist, enthaltend eine Einrichtung zum dynamischen Programmieren des Crossbarschalters, um selektive Punkt-Punkt-Verbindungen zwischen den Eingangsleitungen und den Ausgangsleitungen herzustellen, ferner mit einer Einrichtung zum Programmieren des Crossbarschalters, um eine beständige Menge von Verbindungen zwischen den Eingangsleitungen und den Ausgangsleitungen herzustellen, um eine Ringtopologie zu schaffen, wobei die Ringtopologie mehrere Leitungskarten (10m-10q) als Stationen enthält, wobei jede Leitungskarte (10m-10q) an eine der Eingangsleitungen und eine der Ausgangsleitungen angeschlossen ist.

**5.** Crossbarschalter nach Anspruch 1, mit einer Einrichtung zum Programmieren des Crossbarschalters, um eine beständige Menge von Verbindungen zwischen mehr als einer der Eingangsleitungen und einer der Ausgangsleitungen herzustellen, um eine Bustopologie zu schaffen, wobei die Bustopologie mehrere Leitungskarten (10m-10q) als Stationen enthält, wobei jede Leitungskarte (10m-10q) an eine der Eingangsleitungen und eine der Ausgangsleitungen angeschlossen ist.

**6.** Crossbarschalter nach Anspruch 1, bei dem sämtliche Eingangsleitungen und Ausgangsleitungen an einen gemeinsamen synchronen parallelen Bus angeschlossen sind und die Verbindungen durch Arbitrierung der Nutzung des Busses im Zeitmultiplex hergestellt werden, enthaltend einen Controller (38) zur Arbitrierung der Nutzung des Busses, wobei der Controller (38) Anforderungssignale von einer Station für jeden der Eingänge empfängt.

**7.** Verfahren zum Betreiben eines Crossbarschalters mit mehreren Eingangsleitungen (14; 14a-14e), mehreren Ausgangsleitungen (15; 15a-15e) und mehreren Kreuzungspunkten (40), wovon sich in jedem Schnittpunkt einer Eingangsleitung (14; 14a-14e) und einer Ausgangsleitung (15; 15a-15e) einer befindet, mit den folgenden Schritten:

Entscheiden der Alternative der Ausführung des Schrittes A oder des Schrittes B,

(A) wahlweises Verbinden einer Eingangsleitung (14; 14a-14e) mit einer Ausgangsleitung (15; 15a-15e) für eine unidirektionale Datenübertragung;
(B) wahlweises Verbinden einer oder mehrerer der Eingangsleitungen (14; 14a-14e) mit einer einzigen der Ausgangsleitungen (15; 15a-15e) als eine logische ODER-Verknüpfung für eine unidirektionale Datenübertragung;

Programmieren des Crossbarschalters (12), um eine beständige Menge von Verbindungen zwischen den Eingangsleitungen (14; 14a-14e) und den Ausgangsleitungen (15; 15a-15e) herzustellen, um eine geforderte Bustopologie zu schaffen.

**8.** Verfahren zum Betreiben eines Crossbarschalters nach Anspruch 7, enthaltend das Verbinden jedes verschiedenen Paars einer der Eingangsleitungen und einer der Ausgangsleitungen als einen getrennten Port des Crossbarschalters, enthaltend das Verbinden jeder von mehreren leitungskarten (10m-10q) mit einem der Ports als Stationen eines Netzes, enthaltend den Schritt des dynamischen Programmierens des Crossbarschalters, um selektive Punkt-Punkt-Verbindungen zwischen den Eingangsleitungen und den Ausgangsleitungen herzustellen.

**9.** Verfahren zum Betreiben eines Crossbarschalters nach Anspruch 7, enthaltend den Schritt des Programmierens des Crossbarschalters, um eine beständige Menge von Verbindungen zwischen den Eingangsleitungen und den Ausgangsleitungen herzustellen, um eine Ringtopologie zu schaffen, enthaltend das Verbinden mehrerer Leitungskarten (10m-10q) als Stationen der Ringtopologie, wobei jede Leitungskarte (10m-10q) mit einer der Eingangsleitungen und einer der Ausgangsleitungen verbunden ist.

**10.** Verfahren zum Betreiben eines Crossbarschalters nach Anspruch 7, enthaltend den Schritt des Programmierens des Crossbarschalters, um eine beständige Menge von Verbindungen zwischen mehr als einer der Eingangsleitungen und einer der Ausgangsleitungen herzustellen, um eine Bustopologie zu schaffen, enthaltend das Verbinden mehrerer Leitungskarten (10m-10q) als Stationen der Bustopologie, wobei jede Leitungskarte (10m-10q) mit einer der Eingangsleitungen verbunden wird.

11. Verfahren zum Betreiben eines Crossbarschalters nach Anspruch 7, enthaltend das Verbinden sämtlicher Eingangsleitungen und Ausgangsleitungen mit einem gemeinsamen synchronen parallelen Bus, wobei die Verbindungen durch Arbitrierung der Nutzung des Busses im Zeitmultiplex hergestellt werden.

12. Verfahren zum Betreiben eines Crossbarschalters nach Anspruch 11, mit einem Controller (38), der die Arbitrierung der Nutzung des Busses ausführt und Anforderungssignale von einer Station von jedem der Eingänge empfängt.

**Revendications**

1. Commutateur crossbar (12) comportant :

une pluralité de lignes d'entrée (14 ; 14a - 14e) ;
une pluralité de lignes de sortie (15 ; 15a - 15e) ;
des moyens (38) pour programmer ledit commutateur crossbar (12) afin de former un ensemble continu de connexions entre lesdites lignes d'entrée (14 ; 14a - 14e) et lesdites lignes de sortie (15 ; 15a - 15e) afin de fournir une topologie du type bus requise ;
une pluralité de points d'intersection (40), un desdits points d'intersection (40) se trouvant à chaque intersection d'une ligne d'entrée (14 ; 14a - 14e) et d'une ligne de sortie (15 ; 15a - 15e) ;

chacun desdits points d'intersection (40) incluant :

des moyens (41) pour connecter d'une manière sélective une ligne d'entrée (14 ; 14a - 14e) à une ligne de sortie (15 ; 15a - 15e) pour un transfert unidirectionnel de données ;
des moyens (42) pour connecter d'une manière sélective une ou plusieurs desdites lignes d'entrée (14 ; 14a - 14e) à une ligne unique parmi lesdites lignes de sortie (15 ; 15a - 15e), en tant que connexion logique OU, pour un transfert de données unidirectionnel.

2. Commutateur crossbar selon la revendication 1, dans lequel lesdites lignes d'entrée (14 ; 14a - 14e) et lesdites lignes de sortie (15 ; 15a - 15e) sont reliées à un bus parallèle commun.

3. Commutateur crossbar selon la revendication 1, dans lequel ladite topologie du type bus inclut une pluralité de cartes de ligne (10a - 10j) en tant que stations, chaque carte de ligne (10a - 10j) étant reliée à l'une desdites lignes d'entrée (14) et à l'une desdites lignes de sortie (15).

4. Commutateur crossbar selon la revendication 1, dans lequel chaque paire différente constituée d'une desdites lignes d'entrée et d'une desdites lignes de sortie est un port séparé dudit commutateur crossbar, incluant des moyens pour programmer d'une manière dynamique ledit commutateur crossbar afin d'établir des connexions point à point sélectives entre lesdites lignes d'entrée et lesdites lignes de sortie, incluant en outre des moyens pour programmer ledit commutateur crossbar afin d'établir un ensemble continu de connexions entre lesdites lignes d'entrée et lesdites lignes de sortie pour fournir une topologie en anneau, ladite topologie en anneau incluant une pluralité de cartes de ligne (10m - 10q) en tant que stations, chaque carte de ligne (10m - 10q) étant reliée à l'une desdites lignes d'entrée et à l'une desdites lignes de sortie.

5. Commutateur crossbar selon la revendication 1 incluant des moyens pour programmer ledit commutateur crossbar afin d'établir un ensemble continu de connexions entre un nombre de lignes d'entrée supérieur à un et l'une desdites lignes de sortie afin de fournir une topologie du type bus, ladite topologie du type bus incluant une pluralité de cartes de ligne (10m - 10q) en tant que stations, chaque carte de ligne (10m - 10q) étant reliée à l'une desdites lignes d'entrée et à l'une desdites lignes de sortie.

6. Commutateur crossbar selon la revendication 1, dans lequel lesdites lignes d'entrée et lesdites lignes de sortie sont toutes reliées à un bus parallèle synchrone commun et lesdites connexions sont établies en arbitrant l'utilisation dudit bus par multiplexage par répartition temporelle, incluant une unité de commande (38) pour arbitrer l'utilisation dudit bus, ladite unité de commande (38) recevant des signaux de demande en provenance d'une station pour chacune desdites entrées.

7. Procédé pour commander un commutateur crossbar ayant une pluralité de lignes d'entrée (14 ; 14a - 14e), une pluralité de lignes de sortie (15 ; 15a - 15e) et une pluralité de points d'intersection (40), un point d'intersection (40) de ladite pluralité de points d'intersection se trouvant à chaque intersection d'une ligne d'entrée (14 ; 14a - 14e) et d'une ligne de sortie (15 ; 15a - 15e), comportant les étapes consistant à :

décider s'il faut effectuer l'étape A ou l'étape B consistant à

(A) relier d'une manière sélective une ligne d'entrée (14 ; 14a - 14e) à une ligne de sortie (15 ; 15a - 15e) pour un transfert de données unidirectionnel ;

(B) relier d'une manière sélective une ou plusieurs desdites lignes d'entrée (14 ; 14a - 14e) à une seule desdites lignes de sortie (15 ; 15a - 15e) en tant que connexion logique OU pour un transfert de données unidirectionnel ;

programmer ledit commutateur crossbar (12) afin d'établir un ensemble continu de connexions entre lesdites lignes d'entrée (14 ; 14a - 14e) et lesdites lignes de sortie (15 ; 15a - 15e) afin de fournir une topologie du type bus requise.

8. Procédé pour commander un commutateur crossbar selon la revendication 7 incluant la connexion de chaque paire différente constituée d'une desdites lignes d'entrée et d'une desdites lignes de sortie en tant que port séparé dudit commutateur crossbar, incluant la connexion de chacune des cartes d'une pluralité de cartes de ligne (10m - 10q) à l'un desdits ports en tant que stations d'un réseau, incluant l'étape consistant à programmer d'une manière dynamique ledit commutateur crossbar pour établir des connexions point à point sélectives entre lesdites lignes d'entrée et lesdites lignes de sortie.

9. Procédé pour commander un commutateur crossbar selon la revendication 7 incluant l'étape consistant à programmer ledit commutateur crossbar pour établir un ensemble continu de connexions entre lesdites lignes d'entrée et lesdites lignes de sortie afin de fournir une topologie en anneau, incluant la connexion d'une pluralité de cartes de ligne (10m - 10q) en tant que stations de ladite topologie en anneau, chaque carte de ligne (10m - 10q) étant reliée à l'une desdites lignes d'entrée et à l'une desdites lignes de sortie.

10. Procédé pour commander un commutateur crossbar selon la revendication 7 incluant l'étape consistant à programmer ledit commutateur crossbar pour établir un ensemble continu de connexions entre un nombre de lignes d'entrée supérieur à un et l'une desdites lignes de sortie afin de fournir une topologie du type bus, incluant la connexion d'une pluralité de cartes de ligne (10m - 10q) en tant que stations de ladite topologie du type bus, chaque carte de ligne (10m - 10q) étant reliée à l'une desdites lignes d'entrée et à l'une desdites lignes de sortie.

11. Procédé pour commander un commutateur crossbar selon la revendication 7 incluant la connexion de toutes lesdites lignes d'entrée et desdites lignes de sortie à un bus parallèle synchrone commun et lesdites connexion sont établies en arbitrant l'utilisation dudit bus par multiplexage par répartition temporelle.

12. Procédé pour commander un commutateur crossbar selon la revendication 11 incluant une unité de commande (38) pour arbitrer l'utilisation dudit bus, ladite unité de commande (38) recevant des signaux de demande en provenance d'une station pour chacune desdites entrées.

FIG. 1

EP 0 594 198 B1

FIG. 1A

FIG. 2

DATA-IN {
32
14

DATA-OUT {
15

ARB-REG
36

ARB-GNT
36

ADDRESS {
37

*FIG. 3*

10m  10n  10p  10q

TRANS-LEFT

REC-1

REC-2

REC-3

TRANS-RIGHT

SLOTS → 1  2  3  4

*FIG. 5*

BUS

10j  10j  10j  10j

TRANS-LEFT

TRANS-RIGHT

10a  10b  10c  10d

*FIG. 6*

14

FIG. 4

FIG. 7

FIG. 8

FIG. 9

FIG. 10

16